Europäisches Patentamt

European Patent Office

Office européen des brevets

(11) Publication number: **0 251 514 B1**

# EUROPEAN PATENT SPECIFICATION

(45) Date of publication of patent specification: **31.03.93**  (51) Int. Cl.⁵: **G05B 19/19**, G05B 19/405

(21) Application number: **87304971.2**

(22) Date of filing: **04.06.87**

(54) **Apparatus for controlling industrial multijoint arm robot.**

(30) Priority: **04.06.86 JP 129697/86**

(43) Date of publication of application:
**07.01.88 Bulletin 88/01**

(45) Publication of the grant of the patent:
**31.03.93 Bulletin 93/13**

(84) Designated Contracting States:
**DE SE**

(56) References cited:
EP-A- 0 128 355
EP-A- 0 151 417

IEEE TRANSACTIONS ON SYSTEMS, MAN AND CYBERNETICS. vol. SMC16, no. 1, February 1986, NEW YORK US & H. HEMAMI: "COMPUTATION OF MULTIBODY SYSTEM DYNAMICS BY A MULTIPROCESSOR SCHEME"

PROCEEDINGS OF THE IEEE INTERNATIONAL CONFERENCE && AUTOMATION vol. 1, April 1986, LOS ANGELES US pages 183 - 189; T. C. HSIA: "ADAPTIVE CONTROL OF ROBOT MANIPULATORS - A REVIEW"

PROCEEDINGS OF THE IEEE INTERNATIONAL CONFERENCE && AUTOMATION vol. 2, 1985, LOS ANGELES US & BALLARD D.: "SELF-CALIBRATION IN ROBOT MANIPULATORS""

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Osuka, Koichi c/o Patent Division**
**Kabushiki Kaisha Toshiba 1-1 Shibaura**
**1-chome**
**Minato-ku Tokyo 105(JP)**

(74) Representative: **Freed, Arthur Woolf et al**
**MARKS & CLERK 57-60 Lincoln's Inn Fields**
**London WC2A 3LS (GB)**

**Description**

The present invention relates to computer-controlled robots and, more particularly, to a control apparatus for an industrial multijoint robot arm, i.e., a manipulator.

An industrial arm robot, known as a manipulator, is provided on a stationary base table, and has a plurality of link portions mechanically connected to each other through joint mechanisms. Actuators are respectively arranged on joint portions. Each actuator drives its corresponding joint portion in response to an operation control signal, thereby pivoting (or rotating) the associated link portion through a desired angle at a given speed. If appropriate control signals are supplied to the actuators, the arm of the manipulator can be driven in a three-dimensional manner, enabling it to duplicate complex movements performed by the human arm. If the control signals supplied to the actuators can be sequentially produced by a computer, a series of appropriate arm movements required for completing a complicated process can be accurately and repetitively controlled in a given sequence. Therefore, if a manipulator of this type is applied to an industrial manufacturing process, it can contribute greatly to an improvement in productivity.

A control apparatus for the multijoint manipulator includes a computer which operates under the control of a software program. However, the conventional control apparatus suffers from a problem in that it is difficult to compensate for a change in the operating characteristics of the manipulator. During the operation of the manipulator's link portions, an undesirable interference inevitably occurs between a nonlinear characteristic and the multijoint. If a proportional differential/integral loop or a PID control loop for the actuators is simply set for each joint portion regardless of these factors, the manipulator arm cannot then perform its task with high accuracy, especially when the arm is operating at high speed. Inevitably, therefore, the performance of the manipulator arm is degraded.

In order to compensate for the interference occurring between the nonlinear characteristic and the multijoint in the associated link portion, a nonlinear compensation unit is provided to simulation-calculate a dynamic characteristic at each joint portion, in advance, and to appropriately control each actuator in accordance with the calculated dynamic characteristic. More specifically, when a link portion is driven at a predetermined angular velocity, a nonlinear force and the interference force produced at each joint portion of the actuator are calculated. These forces act to interfere with an appropriate movement of the link of the joint portion. Therefore, when each actuator is controlled so as to compensate for the adverse influence of these forces in relation to arm movement, the link portion can be accurately driven which operating at high speed.

With this arrangement, however, if a change occurs in the simulation-calculated dynamic characteristic of the manipulator, accurate actuator compensation control of the nonlinear compensation unit is then no longer possible. As a result, the precision upon high-speed operation of the link portion cannot be expected. In general, even in manipulators having the same arrangement, the dynamic characteristics of each individual unit tend to vary; this is due to errors occurring in the manufacturing process. Even in an identical product, the dynamic characteristics of link portions coupled through mechanical joints normally change due to environmental change and/or aging. The nonlinear control unit with the above arrangement cannot compensate for a change in its dynamic characteristics. Therefore, in the control apparatus of the manipulator of this type, compensation power of nonlinear force during the high-speed operation of the link portion cannot be sufficiently high.

Proceedings of the IEEE International Conference on Robotics & Automation. Vol. 1, April 1986, Los Angeles USA, Pages 183 - 189; T.C. Hsia; "Adaptative Control of Robot Manipulators - A Review" discloses an apparatus for controlling a manipulator which has links rotatably coupled with each other at joint portions thereof to constitute a multijoint robot arm, wherein said manipulator has actuators provided at said joint portions for rotating said links, identification means for identifying a dynamical model of said manipulator, computer means for computing control parameters in accordance with the identification result for producing new control parameters so as to compensate for a change in said dynamical model and software servo means using said new control parameters.

EP-A-0128355 also discloses an apparatus for controlling a manipulator which has links rotatably coupled with each other at joint portions thereof to constitute a multijoint robot arm, wherein said manipulator has actuators provided at said joint portions for rotating said links, which includes a computer generating correction signals corresponding to the nonlinear dynamics of the manipulator links.

It is therefore an object of the present invention to provide a new and improved manipulator control apparatus, which can effectively compensate for individual differences or changes over time in the dynamical models unique to a manipulator, and hence, can improve the control accuracy of the high-speed movement of a robot arm.

EP 0 251 514 B1

According to the present invention, there is provided an apparatus for controlling a manipulator having links rotatably coupled with each other at joint portions thereof to constitute a multijoint robot arm, wherein said manipulator has actuators provided at said joint portions, for rotating said links, and sensors provided at said joint portions, for measuring rotation of said links to produce sensor output signals, and wherein said apparatus comprises: identification means for identifying a dynamical model of said manipulator and for producing a first electrical signal indicative of an identification result; computation means connected to said identification means, for computing control parameters of said manipulator in accordance with the identification result, and for producing a second electrical signal indicative of new manipulator control parameters calculated so as to compensate for a change in said dynamical model; and software servo means connected to said computation means, for producing, using said new control parameters, a third electrical signal corresponding to a drive sequence control signal of said actuators, necessary to control rotating movement of said links, whereby link drive control performed by said software servo means can compensate for the change in said dynamical model, characterized in that said apparatus further comprises: mode-designation means connected to said sensors and said identification means, for monitoring a change in the dynamical model of said manipulator based on said sensor output signals, and for causing said identification means to be operative when a change in the dynamical model exceeds a predetermined level; drive means connected to said actuators, for electrically driving said actuators in response to said third electrical signal being supplied thereto; and detection means connected to said sensors, for receiving the sensor output signals representing actually measured data of rotation of said links, and for detecting a rotating angle and an angular velocity of a corresponding link at each joint portion, and in that said mode-designation means electrically connects said software servo means to said drive means and said detection means in a normal control mode, and automatically sets said apparatus in a dynamical model-identification mode when a change in the dynamical model of said manipulator exceeds a predetermined level, so that said software servo means is electrically separated from said drive means and said detection means, while said identification means is electrically connected to said drive means and said detection means.

A preferred embodiment of the invention will now be described with reference to the accompanying drawings, in which:

Fig. 1 is a block diagram schematically showing the overall arrangement of a manipulator control apparatus according to a preferred embodiment of the present invention; and

Fig. 2 is a flowchart showing the principal operation of the control apparatus associated with an operation mode switching operation between a normal control mode and a dynamic characteristic adjusting mode.

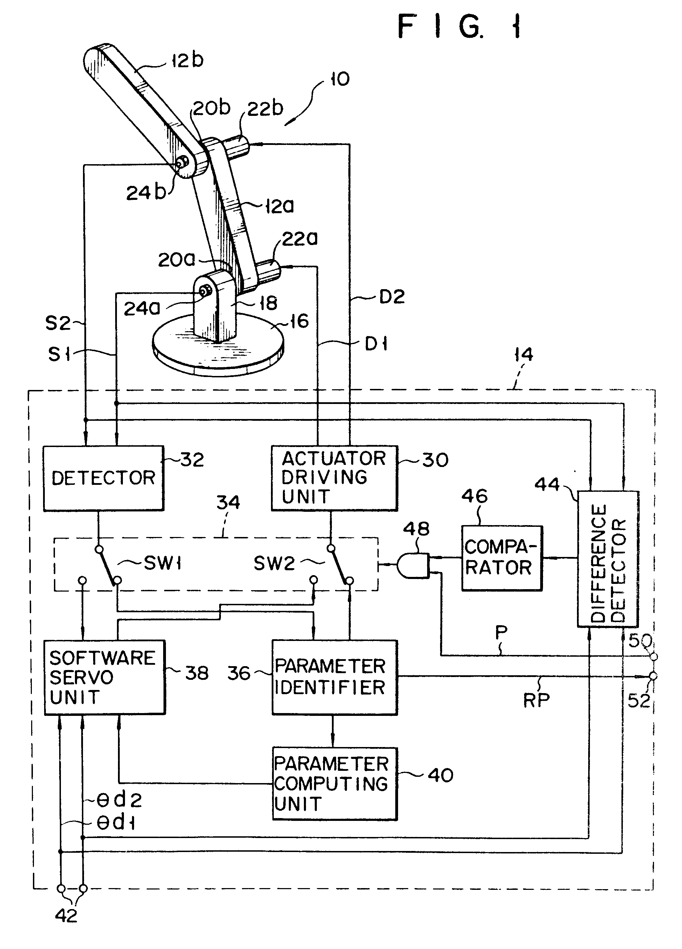

Fig. 1 schematically illustrates the overall system arrangement of a control apparatus for an industrial multijoint robot arm, i.e., a multijoint manipulator, according to a preferred embodiment of the present invention. In this system, manipulator 10 has a plurality of metal link portions 12a and 12b which are mechanically coupled to be operable through a joint mechanism. Accordingly, manipulator 10 has two joints. Manipulator 10 is electrically connected to control apparatus 14. Control apparatus 14 controls the multijoint operation of manipulator 10, thereby providing a desired arm movement.

Manipulator 10 is provided on base table 16 which is fixed to a floor. Support member 18 is vertically fixed on base table 16. Movable links 12a and 12b are mounted on support member 18. More specifically, one end of first link 12a is rotatably coupled to the upper end of support member 18 through rotary joint portion 20a. Therefore, first link 12a is freely pivotal or rotatable in a vertical reference plane about joint portion 20a coupled to the upper end of support member 18. One end of second link 12b is pivotally coupled to the other end of first link 12a through rotary joint portion 20b. Therefore, second link 12b is freely pivotal or rotatable in a vertical reference plane about joint portion 20b coupled to first link 12a. The other end of second link 12b is a free end, and a function unit (not shown) such as a hand unit, is mounted thereon, if required.

Joint portions 20a and 20b of the links are respectively provided with actuators 22a and 22b including motors. Since actuators 22a and 22b independently drive the corresponding joint portions, pivotal movements of links 12a and 12b can be independently controlled. Joint portions 20a and 20b are also provided with angle sensors 24a and 24b. Each angle sensor 24a or 24b electrically detects the actual angle of rotation of the link at corresponding joint portion 20a or 20b.

Control apparatus 14 has actuator driving unit 30 connected to actuators 22a and 22b (which will hereinafter be denoted simply by "22" if they need not be distinguished from each other), and detector 32 connected to angle sensors 24. Drive unit 30 supplies the actuators with drive signals D1 and D2 for specifying the amounts of rotations of the links at the corresponding rotary joint portions. Detector 32 receives detection signals S1 and S2 from angle sensors 24, and calculates angles of rotation $\theta_1$ and $\theta_2$ and angular velocities $\omega_1$ and $\omega_2$ (or also represented by "$\dot{\theta}_1$ and $\dot{\theta}_2$") of the links pivoting at the corresponding joint portions.

3

In control apparatus 14, drive unit 30 and detector 32 are connected to mode switch unit 34. Although switch unit 34 is illustrated as a mechanical double throw switch in Fig. 1 for the sake of visual understanding, it is, in practice, constituted by an electronic switch circuit. For the sake of simplicity, in the following description, unit 34 is equivalently represented as if two switches SW1 and SW2 were parallel-arranged.

Parameter identification unit 36 has two terminals connected to the first switch terminals of switches SW1 and SW2, respectively. When switches SW1 and SW2 are switched to the side of the first switch terminals (the state shown in Fig. 1), software servo unit 38 is electrically separated from other circuit components in control apparatus 14. In this state, therefore, parameter identification unit 36 is connected to drive unit 30 and detector 32 via switch unit 34, and this system is set in a dynamic characteristic-adjustment mode of manipulator 10. In this case, an output signal from parameter identification unit 36 is supplied to drive unit 30, and an output signal from detector 32 is transferred to parameter identification unit 36.

On the other hand, when switches SW1 and SW2 are switched to the side of second switch terminals (this state is not shown in Fig. 1), parameter identification unit 36 is electrically separated, in turn, from other circuit components in control apparatus 14. In this case, therefore, software servo unit 38 is connected to drive unit 30 and detector 32 via switch unit 34, and this system is set in a normal control mode of manipulator 10. In this state, an output signal from software servo unit 38 is supplied to drive unit 30, and an output signal from detector 32 is supplied to software servo unit 38.

Parameter computation unit 40 is connected to parameter identification unit 36 and software servo unit 38. Parameter identification unit 36 identifies the dynamic characteristic of manipulator 10 when switches SW are switched to the first switching state, i.e., to the state shown in Fig. 1. The output signal from parameter identification unit 36, representing the identification result, is supplied to parameter computation unit 40. Parameter computation unit 40 calculates individual control parameters of manipulator 10, by using the identification result, and transfers the calculation results to software servo unit 38, as virtual parameters. Software servo unit 38 constitutes a software servo system in accordance with the known Newton-Euler method using the input virtual parameters. Thereafter, manipulator 10 is controlled in accordance with the software servo system obtained by parameter computing unit 40.

Software servo unit 38 receives input signals $\theta d1$ and $\theta d2$ supplied from an external host controller (not shown) through input terminals 42 of control apparatus 14. These input signals $\theta d1$ and $\theta d2$ define operation target values of links 12 of manipulator 10 when a desired arm movement pattern is to be realized by manipulator 10, and more specifically, angle data and angular velocity data for originally defining sequential rotation of each actuator 22. When software servo unit 38 receives, from detector 32, output signals which represent actual drive angle $\theta$ and actual angular velocity $\omega$ sensed by sensor 24 at each joint portion of manipulator 10 in the normal control mode, it manages these output signals and signals $\theta d1$ and $\theta d2$ in correspondence with each other. Unit 38 produces a software control signal for controlling the links of manipulator 10 in a real-time manner, based on updated control parameter data supplied from computation unit 40. The software control signal is transferred to drive unit 30 via switch unit 34.

With this embodiment, the mode switching operation in switch unit 34 is automatically performed by a mode designation circuit constituted by difference detector or subtractor 44 and comparator 46. More precisely, detection signals S1 and S2 from angle sensors 24 of manipulator 10 are also supplied to the first and second input terminals of difference detector 44. Input signals $\theta d1$ and $\theta d2$, which are supplied from the external host controller (not shown) to control apparatus 14, are input to the third and fourth input terminals of difference detector 44. Difference detector 44 detects an error between the sensor outputs at link joint portion 20a or 20b and corresponding host controller signal $\theta d1$ or $\theta d2$, and supplies an error signal to comparator 46 connected to the output terminal thereof. When a detected error exceeds a predetermined reference value, comparator 46 supplies a mode-switching instruction signal to the first input terminal of AND gate 48. At this time, AND gate 48 receives at its second input terminal system status-designation signal P supplied from the host controller (not shown) via output terminal 50 of control apparatus 14. Since parameter identification unit 36 supplies end signal Rp (e.g., having logic "0" level upon completion of identification) to the host controller via output terminal 52 of control apparatus 14, each time the dynamic characteristic identification is completed, the host controller can recognize the execution and completion of dynamic model identification of manipulator 10. When control apparatus 14 enables re-execution of dynamic characteristic identification of manipulator 10, system status-designation signal P has logic "1" level. Therefore, AND gate 48 transfers the mode-switching signal output from comparator 46 to switch unit 34. In response to this, switch unit 34 switches a signal path, so as to allow control apparatus 14 to perform identification. Upon switch unit 34 performing its switching operation, the operation mode of control apparatus 14 is switched from the normal control mode to the dynamic characteristic identification

EP 0 251 514 B1

mode.

The operation mode of the embodiment of the present invention having the above arrangement will now be described.

Switches SW1 and SW2 of switch unit 34 are in the first switching state (this state is not shown) for electrically connecting software servo unit 38 to actuator drive unit 30 and detector 32. Therefore, parameter identification unit 36 is electrically disconnected in control apparatus 14, and apparatus 14 is set in the normal control mode, in which state it produces a software control signal for controlling manipulator 10 in a real-time manner, based on signals $\theta$d supplied from the external host controller and detection signals from detector 32. Since the control signal is sequentially transferred to drive unit 30 via switch unit 34, actuators 22a and 22b of manipulator 10 are driven by drive unit 30. Links 12 are pivoted or rotated at the joint portions of manipulator 10, and perform an arm movement in accordance with a predetermined program desired by an operator.

Signals from angle sensors 24 are transferred not only to drive unit 30 but also to difference detector 44. Difference detector 44 always detects an error between an actually measured rotating movement of each link and a theoretical rotating movement specified by the host controller. Therefore, if the desired amount of link rotation cannot be achieved, on account of an individual difference or changes, over time, in the dynamic characteristic of manipulator 10, even though drive unit 30 has appropriately driven actuators 22 of manipulator 10 in accordance with the control signal produced by software servo unit 38, a detection signal whose level corresponds to an error is transferred from difference detector 44 to comparator 46. When the rotation error in the manipulator link portion exceeds a predetermined allowance, i.e., when the level of the output signal from difference detector 44 exceeds a reference level, the level of the output signal from comparator 46 changes stepwise. At this time, if system status-designation signal P supplied from the external host controller has logic "1" level, AND gate 48 supplies a signal having logic "1" level to switch unit 34, as the mode switching signal.

In response to the signal from AND gate 48, switches SW1 and SW2 of switch unit 34 are switched to the second switching state (the state shown in Fig. 1), and control apparatus 14 is set in the dynamic characteristic-adjustment mode. As is described above, software servo unit 38 is disconnected from other circuit components in control apparatus 14, and instead, parameter identification unit 36 and parameter computation unit 40 are electrically connected to drive unit 30 and detector 32. In this state, actually measured rotating angle data and angular velocity data at each joint portion of manipulator 10, obtained by detector 32, are supplied to parameter identification unit 36 via switch unit 34.

Parameter identification unit 36 identifies the dynamical model of manipulator 10, and supplies the identification result to parameter computation unit 40. In response to this, unit 40 calculates various parameters at the joint portions of manipulator 10, and thus updates the dynamical model of manipulator 10. The control parameters, which are rewritten so as to compensate for a change in the dynamical model of manipulator 10, are supplied to software servo unit 38, which stores this new control parameter data. As a result, subsequent software control is performed based on the new control parameter data.

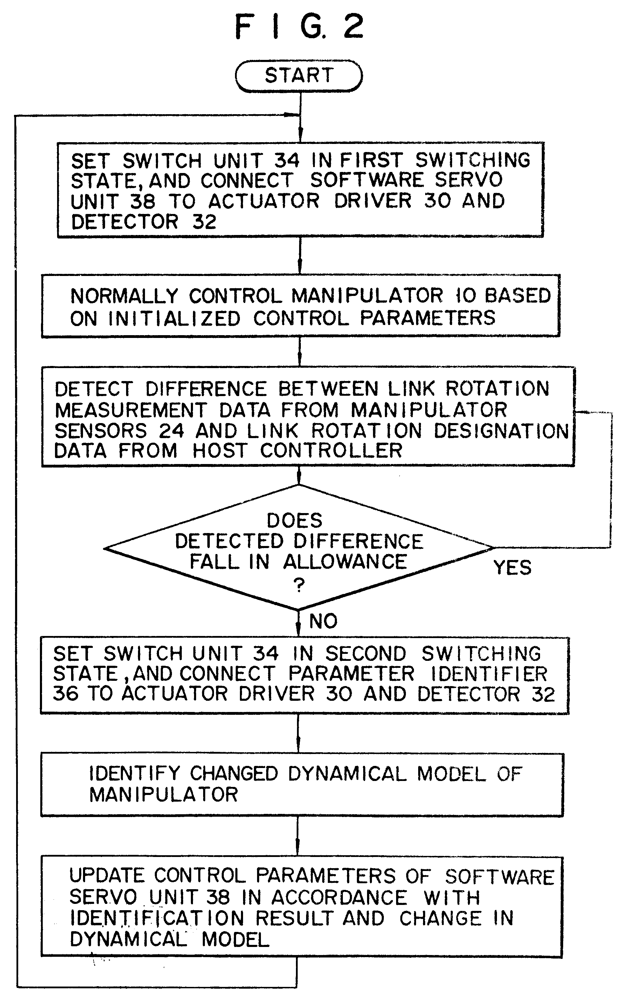

When the dynamic characteristic identification is completed, identification unit 36 supplies signal Rp, indicating completion of identification, to the external host controller via terminal 52 of control apparatus 14. In response to this signal transfer, the host controller changes the logic level of the system status-designatation signal supplied to AND gate 48 from "1" to "0". Therefore, the output signal from AND gate 48 has logic "0" level, and switches SW1 and SW2 of switch unit 34 are switched to the initial state. As a result, control apparatus 14 is set in the normal control mode. The automatic mode-setting process of control apparatus 14 described above is summarized in the flowchart shown in Fig. 2.

In the above operation mode, parameter identification unit 36 is operated in accordance with an algorithm described below in detail. The equation of motion of bijoint manipulator 10 in this embodiment will be described first. In this embodiment, since manipulator 10 is installed on the floor, the force of gravity acts vertically downward with respect to links 12. If an input of actuator 22a is given as $u_1$, an input of actuator 22b is given as $u_2$, an output from angle sensor 24a is given as $\theta_1$, and an output from angle sensor 24b is given as $\theta_2$, the equation of motion of manipulator 10 is expressed as follows:

5

$$(J_1 + J_2 + 2R_2\ell_1\cos\theta_2)\ddot{\theta}_1 + (J_2 + R_2\ell_1\cos\theta_2)\ddot{\theta}_2$$
$$- 2(R_2\ell_1\sin\theta_2)\dot{\theta}_1\dot{\theta}_2 - (R_2\ell_1\sin\theta_2)\dot{\theta}_2^2 + R_1 g\sin\theta_1$$
$$+ R_2 g\sin(\theta_1 + \theta_2) + B_1\dot{\theta}_1 + f_1(\dot{\theta}_1) = u_1$$
$$...(1)$$

$$[J_2 + R_2\ell_1\cos\theta_2]\ddot{\theta}_1 + [J_2]\ddot{\theta}_2 + (R_2\ell_1\sin\theta_2)\dot{\theta}_1^2$$
$$+ R_2 g\sin(\theta_1 + \theta_2) + B_2\dot{\theta}_2 + f_2(\dot{\theta}_2) = u_2$$
$$...(2)$$

where $J_1$, $J_2$, $R_1$, $R_2$, $f_1(\dot{\theta}_1)$, $f_2(\dot{\theta}_2)$ are respectively represented by:

$$J_1 = I_1 + m_1 r_2^2 + m_2\ell_1^2$$
$$J_2 = I_1 + m_1 r_2^2$$
$$R_1 = (m_1 + m_2)\ell_1 + m_1 r_1$$
$$R_2 = m_2 r_2$$

$$f_i(\dot{\theta}_i) = \begin{cases} f_i & \text{if } \dot{\theta}_i > 0 \ (i = 1, 2) \\ -f_i & \text{if } \dot{\theta}_i < 0 \\ \text{static friction} & \text{if } \dot{\theta}_i = 0 \ (\triangleq f_{ic}) \end{cases}$$

and

li:     the moment of inertia associated with the center of gravity of the ith link
mi:     the mass of the ith link
ri:     the distance from the base portion of the ith link to the center of gravity of the ith link
$\ell$i:     the length of the ith link
fi:     the torque of kinetic friction
g:     the gravitational acceleration

If switch unit 34 is switched to the state shown in Fig. 1, to have rotary joint portion 20a as a first joint and rotary joint portion 20b as a second joint, parameter identification unit 36 is operated according to the following algorithm.

Step 1) Static Test

(1-1) The respective joints are moved to where $\theta_1 = 90°$, and $\theta_2 = 0°$.
(1-2) The first joint is fixed by a brake, and the second joint is set in a statically balanced state by the joint torque. The mechanical balancing equation at this time is given by:

$$R_2 g\sin(\theta_1 + \theta_2) + f_{2c} = u_2 \qquad (3)$$

(1-3) The torque for the second joint is gradually increased (or decreased) so as to measure torque $u_2^+$ ($u_2^-$) immediately before second link 12b begins to move, and $R_2$ and $f_{2c}$ are calculated from the following equation:

$$R_2 = (u_2^+ + u_2^-)/2g\sin(\theta_1 + \theta_2) \qquad ...(4)$$
$$|f_{2c}| = |(u_2^+ - u_2^-)/2| \qquad ...(5)$$

(1-4) The second joint is fixed by a brake, and the first joint is set in a statically balanced state by the joint torque. The mechanical balancing equation at this time is given by:

<div align="center">6</div>

$R_1 g\sin\theta_1 + R_2 g\sin(\theta_1 + \theta_2) + f_1 c = u_1$     (6)

(1-5) The torque for the first joint is gradually increased (or decreased), so as to measure torque $u_1^+$ ($u_1^-$) immediately before first link 12a begins to move, and $R_1$ and $f_1 c$ are calculated from the following equations:

$$R_1 = [(u_1^+ + u_1^-)/2 - R_2 g\sin(\theta_1 + \theta_2)]/g\sin\theta_1$$

$$\ldots(7)$$

$$\left| f_1 c \right| = \left| (u_1^+ - u_1^-)/2 \right| \qquad \ldots(8)$$

(1-6) With the above operation, $R_2$, $f_2 c$, $R_1$, and $f_1 c$ are calculated.

Step 2) Equiangular Velocity Motion Test

(2-1) The first joint is fixed by a brake, and torque given by the following equation is applied to the second joint:

$$u_2 = T_2^1 u(t) + R_2 g\sin(\theta_1 + \theta_2) \qquad \ldots(9)$$

Where $T_2^1$ is an appropriate integer, and u(t) is a step function. All the parameters on the right side of equation (9) are known parameters. Therefore, the equiangular velocity motion can be obtained due to the presence of the viscosity resistance upon application of input given by equation (9). At this time, the equation of motion is:

$$B_2 \dot{\theta}_2^{\,1} + f_2 = T_2^1 \qquad \ldots(10)$$

(2-2) When $T_2$ yielding $T_2^2 \neq T_2^1$ is selected, and an input similar to that given by equation (9) is applied, the following equation of motion can be obtained:

$$B_2 \dot{\theta}_2^{\,2} + f_2 = T_2^2 \qquad \ldots(11)$$

(2-3) From equations (10) and (11), the following equation is obtained:

$$\begin{bmatrix} B_2 \\ f_2 \end{bmatrix} = \begin{bmatrix} \dot{\theta}_2^{\,1} & 1 \\ \dot{\theta}_2^{\,2} & 1 \end{bmatrix}^{-1} \begin{bmatrix} T_2^1 \\ T_2^2 \end{bmatrix} \qquad \ldots(12)$$

(2-4) The second joint is fixed by a brake, and torque represented by the following equation is applied to the first joint:

$$u_1 = T_1^1 u(t) + R_1 g\sin\theta_1 + R_2 g\sin(\theta_1 + \theta_2)$$

$$\ldots(13)$$

7

(2-5) The same test as in (2-1) to (2-3) is conducted to obtain the following equation:

$$\begin{bmatrix} B_1 \\ f_1 \end{bmatrix} = \begin{bmatrix} \dot{\theta}_1{}^1 & 1 & T_1^1 \\ \dot{\theta}_1{}^2 & 1 & T_1^2 \end{bmatrix} \qquad \ldots (14)$$

(2-6) In this manner, $B_1$, $B_2$, $f_1$, and $f_2$ are calculated from equations (12) and (14).

Step 3) Angular Acceleration Motion Test

(3-1) The first joint is fixed by a brake, and an arbitrary input given by the following equation is applied to the second joint:

$$u_2 = V_2(t) \qquad (15)$$

From equation (2), the equation of motion at this time is:

$$[J_2]\ddot{\theta}_2 + [B_2]\dot{\theta}_2 + R_2 g \sin(\theta_1 + \theta_2) + f_2 \mathrm{sgn}\,\dot{\theta}_2$$
$$= V_2(t) \qquad \ldots (16)$$

From equation (16), $J_2$ is calculated using the following equation:

$$J = \int_{t_0}^{t_1} \{V_2(t) - B_2\dot{\theta}_2 - R_2 g \sin(\theta_1 + \theta_2)$$
$$- f_2 \mathrm{sgn}\,\dot{\theta}_2\}\,d\tau / \{\dot{\theta}_2(t_1) - \dot{\theta}_2(t_0)\} \qquad \ldots (17)$$

where $t_0$ is the motion-start time, and $t_1$ is a motion-end time. In equation (17), parameters, angle data, angular velocity data, and torque data appearing on the right side are known. Therefore, $J_2$ can be calculated.

(3-2) The second joint is fixed by a brake ($\theta_2 = 0°$), and an arbitrary input given by the following equation is applied to the first joint:

$$u_1 = V_1(t) \qquad (18)$$

From equation (1), the equation of motion at this time is:

$$[J_1 + J_2 + 2R_2\ell_1]\ddot{\theta}_1 + B_1\dot{\theta}_1 + R_1 g \sin\theta_1$$
$$+ R_2 g \sin(\theta_1 + \theta_2) + f_1 \mathrm{sgn}\,\dot{\theta}_1 = V_1(t) \qquad \ldots (19)$$

From equation (19), $J_1$ is calculated using the following equation:

$$J_1 = \int_{t_0}^{t_1} \{V_1(t) - B_1\dot{\theta}_1 - R_1 g \sin\theta_1 - R_2 g \sin(\theta_1 + \theta_2)$$
$$- f_1 \mathrm{sgn}\,\dot{\theta}_1\}\,d\tau / \{\dot{\theta}_1(t_1) - \dot{\theta}_1(t_0)\} - J_2 - 2R_2\ell_1$$
$$\ldots (20)$$

The right side of equation (20) is known. Therefore, $J_1$ can be obtained.

In this manner, parameter identification unit 36 identifies the dynamical model of manipulator 10.

Subsequently, parameter computation unit 40 calculates control parameters used in software servo unit 38, based on the dynamical model obtained by parameter identification unit 36. As described above, identification unit 36 can identify not individual physical parameters such as li, mi, ri, and the like, but parameters obtained therefrom, such as:

$$J_1 = I_1 + m_1 r_1{}^2 + m_2 \ell_1{}^2$$
$$J_2 = I_2 + m_2 r_2{}^2$$
$$R_1 = m_1 r_1$$
$$R_2 = (m_1 + m_2)\ell_1 + m_1 r_1$$

Computation unit 40 performs calculations for redecomposing these parameters $J_1$, $J_2$, $R_1$, and $R_2$ in accordance with the following algorithm:

Step-1) $m_1 = m_2 = 1$     (21)

Step-2) $r_1 = R_1 - 2\ell_1$     (22)

$r_2 = R_2$     (23)

Step-3) $I_1 = J_1 - r_1 - \ell_1$     (24)

$I_2 = J_2 - r_2{}^2$     (25)

The parameters obtained by the calculations are supplied to software servo unit 38, as virtual parameters. Software servo unit 38 constitutes a software servo system according to the Newton-Euler method using the virtual parameters.

When, with control apparatus 14 for manipulator 10 according to an embodiment of the present invention, the dynamical model of manipulator 10 changes individually or over time and its change exceeds a predetermined allowance, the control parameters of software servo unit 38 can be appropriately updated so as to compensate for a change in dynamical model. Therefore, rotation drive control of links 12 of manipulator 10 can be performed with sufficiently high accuracy, even if arm movement is performed at high speed.

According to this embodiment, identification of the dynamical model and updating of the control parameters are not continuously performed, but are selectively performed in place of the normal control mode. In other words, a mode-switching section consisting of switch unit 34 is arranged in control apparatus 14, and control apparatus 14 alternately or selectively executes the normal control mode and the dynamic characteristic-adjustment mode of manipulator 10. The mode-switching operation of control apparatus 14 is automatically performed by a mode designation circuit including difference detector 44 and comparator 46, when a change in the dynamical model of manipulator 10 exceeds a predetermined allowance. Therefore, the dynamical model of manipulator 10 is identified by parameter identification unit 36 when necessary, and the control parameters of software servo unit 38 can be appropriately adjusted in accordance with the identification result. Since parameter identification unit 36 is made operative only when necessary, the number of calculation operations performed in control apparatus 14 can be minimized. Thus, a control period of software servo unit 38 can be shortened, and its control performance can be improved.

Although the present invention has been described with reference to a specific embodiment, it will be understood by those skilled in the art that numerous modifications may be made within the spirit and scope of the inventive contribution.

For example, in the above system, the switching operation between the normal control mode and the dynamic characteristic-adjustment mode in control apparatus 14 is automatically performed by using switch unit 34 under the support of difference detector 44 and comparator 46. However, the mode-switching operation of control apparatus 14 can be manually performed by an operator. In this case, switch unit 34 is normally in a switching state where software servo unit 38 is connected to drive unit 30 and detector 32. When switch unit 34 is manually operated by the operator, the switching state shown in Fig. 1 is obtained. In this case, when the dynamical model of manipulator 10 changes to the extent where it exceeds the predetermined allowance, an alarm sound can be produced in response thereto so as to urge the operator to perform manual switching operation.

**Claims**

1. An apparatus for controlling a manipulator (10) having links rotatably coupled with each other at joint portions thereof to constitute a multijoint robot arm, wherein said manipulator has actuators (22a, 22b) provided at said joint portions (20a, 20b), for rotating said links, and sensors (24a, 24b) provided at said joint portions, for measuring rotation of said links to produce sensor output signals, and wherein said apparatus comprises:

   identification means (36) for identifying a dynamical model of said manipulator and for producing a first electrical signal indicative of an identification result;

   computation means (40) connected to said identification means, for computing control parameters of said manipulator in accordance with the identification result, and for producing a second electrical signal indicative of new manipulator control parameters calculated so as to compensate for a change in said dynamical model; and

   software servo means (38) connected to said computation means, for producing, using said new control parameters, a third electrical signal corresponding to a drive sequence control signal of said actuators, necessary to control rotating movement of said links, whereby link drive control performed by said software servo means can compensate for the change in said dynamical model,

   characterized in that said apparatus further comprises:

   mode-designation means (34, 44, 46) connected to said sensors (24a, 24b) and said identification means (36), for monitoring a change in the dynamical model of said manipulator (10) based on said sensor output signals, and for causing said identification means (36) to be operative when a change in the dynamical model exceeds a predetermined level;

   drive means (30) connected to said actuators (22a, 22b), for electrically driving said actuators (22a, 22b) in response to said third electrical signal being supplied thereto; and

   detection means (32) connected to said sensors (24a, 24b), for receiving the sensor output signals representing actually measured data of rotation of said links, and for detecting a rotating angle and an angular velocity of a corresponding link at each joint portion, and

   in that said mode-designation means electrically connects said software servo means (38) to said drive means (30) and said detection means (32) in a normal control mode, and automatically sets said apparatus (14) in a dynamical model-identification mode when a change in the dynamical model of said manipulator (10) exceeds a predetermined level, so that said software servo means (38) is electrically separated from said drive means (30) and said detection means (32), while said identification means (36) is electrically connected to said drive means (30) and said detection means (32).

2. An apparatus according to claim 1, characterized in that said software servo means (38) stores virtual control parameters corresponding to an initially-set standard dynamical model of said manipulator, and when said new control parameters are supplied from said computation means (40) to said software servo means (38), said software servo means (38) replaces said standard control parameters with said new control parameters.

3. An apparatus according to claim 2, characterized in that said mode-designation means comprises:

   switch means (34), connected to said drive means (30), said detection means (32), said identification means (36), and said software servo means (38), for, in a first switching state, electrically connecting said software servo means (38) to said drive means (30) and said detection means (32), and electrically disconnecting said identification means (36) from said drive means (30) and said detection means (32), and for, in a second switching state, electrically connecting said identification means (36) to said drive means (30) and said detection means (32) and electrically disconnecting said software servo means (38) from said drive means (30) and said detection means (32).

4. An apparatus according to claim 3, characterized in that said mode-designation means further comprises:

   switch control means (44, 46, 48), connected to said switch means (34), for monitoring a change in the dynamical model of said manipulator, and when a change in the dynamical model exceeds a predetermined level, for automatically switching said switch means (34) to the second switching state.

5. An apparatus according to claim 4, characterized in that said switch control means includes:

   difference-detection means (44) for receiving a fourth electrical signal which designates a rotating movement of said links (12) of said manipulator (10) and the sensor output signals from said sensors (24a, 24b), detecting a difference between these input signals, and producing a fifth electrical signal, which represents the detected difference.

6. An apparatus according to claim 5, characterized in that said switch control means further includes:
comparator means (46), connected to said difference-detection means (44), for receiving said fifth electrical signal, comparing the detected difference and a predetermined reference level for defining an allowance, and producing a sixth electrical signal, which designates mode-switching when the detected difference exceeds the reference level, said sixth electrical signal being supplied to said switch means (34), and said switch means being operated in response to said sixth electrical signal.

7. An apparatus according to claim 6, characterized in that said switch means includes an electrical switch circuit (SW1, SW2).

**Patentansprüche**

1. Apparat zur Steuerung eines Manipulators (10) mit an Gelenkteilen drehbar miteinander gekoppelten Gliedern, so daß ein Mehrgelenk-Roboterarm gebildet wird, wobei des Manipulator an den Gelenkteilen (20a, 20b) mit Stellgliedern (22a, 22b) zur Drehung der Glieder ausgerüstet ist und wobei an den Gliedern Sensoren (24a, 24b) zur Messung der von den Gliedern ausgeführten Drehung und Erzeugung von Sensorausgangssignalen vorgesehen sind und wobei der Apparat folgendes umfaßt:
eine Erkennungseinrichtung (36) zur Erkennung eines dynamischen Modells des Manipulators und zur Generierung eines ersten elektrischen Signals, das ein Erkennungsresultat meldet;
eine an der Erkennungseinrichtung angeschlossene Rechnereinrichtung (40) zur Berechnung der Steuerparameter des Manipulators in Übereinstimmung mit dem Erkennungsresultat und zur Generierung eines zweiten elektrischen Signals, das neue Manipulator-Steuerparameter meldet, die berechnet wurden, um eine Änderung des dynamischen Modells auszugleichen; und
eine mit der Rechnereinrichtung gekoppelte Software-Servoeinrichtung (38) zur Erzeugung eines dritten elektrischen Signals unter Verwendung der neuen Steuerparameter entsprechend einem Antriebsfolgesteuersignal der Stellglieder, das zur Steuerung der Drehbewegung der Glieder erforderlich ist, wobei die von der Software-Servoeinrichtung ausgeführte Glieder-Antriebssteuerung die Änderung des dynamischen Modells ausgleichen kann,
dadurch gekennzeichnet, daß der Apparat weiterhin umfaßt:
eine mit den Sensoren (24a, 24b) und der Erkennungseinrichtung (36) gekoppelte Betriebsarten-Bestimmungseinrichtung (34, 44, 46) zur Überwachung einer Änderung des dynamischen Modells des Manipulators (10) auf Basis der Sensorausgangssignale und zur Veranlassung der Erkennungseinrichtung (36) in Funktion zu treten, wenn eine Änderung des dynamischen Modells ein vorgegebenes Ausmaß überschreitet;
eine an den Stellgliedern (22a, 22b) angeschlossene Antriebseinrichtung (30) für den elektrischen Antrieb der Stellglieder (22a, 22b) als Reaktion auf das dritte an diese gelieferte elektrische Signal, und
eine mit den Sensoren (24a, 24b) gekoppelte Auswerteeinrichtung (32) zum Empfang der die tatsächlich gemessenen Rotationsdaten der Glieder repräsentierenden Sensorausgangssignale und zur Demodulierung eines Drehwinkels und einer Winkelgeschwindigkeit eines entsprechenden Gliedes an jedem Gelenkteil, und
daß die Betriebsarten-Bestimmungseinrichtung die Software-Servoeinrichtung (38) mit der Antriebseinrichtung (30) und der Auswerteeinrichtung (32) in einem normalen Steuerungsmodus elektrisch miteinander verbindet und den Apparat (14) automatisch in einen dynamischen Modellerkennungsmodus versetzt, wenn eine Änderung des dynamischen Modells des Manipulators (10) ein vorgegebenes Ausmaß überschreitet, so daß die Software-Servoeinrichtung (38) elektrisch von der Antriebseinrichtung (30) und der Auswerteeinrichtung (32) getrennt ist, während die Erkennungseinrichtung (36) elektrisch mit der Antriebseinrichtung (30) und der Auswerteeinrichtung (32) verbunden ist.

2. Apparat gemäß Anspruch 1, dadurch gekennzeichnet, daß die Software-Servoeinrichtung (38) virtuelle Steuerparameter entsprechend einem erstmals eingestellten dynamischen Standardmodell des Manipulators speichert und wobei die Software-Servoeinrichtung (38) diese Standard-Steuerparameter durch die neuen Steuerparameter ersetzt, wenn die neuen Steuerparameter von der Rechnereinrichtung (40) an die Software-Servoeinrichtung (38) geliefert werden.

**3.** Apparat gemäß Anspruch 2, dadurch gekennzeichnet, daß die Betriebsarten-Bestimmungseinrichtung folgendes umfaßt:

eine mit der Antriebseinrichtung (30), der Auswerteeinrichtung (32), der Erkennungseinrichtung (36) und der Software-Servoeinrichtung (38) gekoppelten Schalteinrichtung (34), die in einem ersten Schaltzustand die Software-Servoeinrichtung (38) elektrisch mit der Antriebseinrichtung (30) und der Auswerteeinrichtung (32) verbindet, während sie die Erkennungseinrichtung (36) von der Antriebseinrichtung (30) und der Auswerteeinrichtung (32) elektrisch trennt, und die in einem zweiten Schaltzustand die Erkennungseinrichtung (36) mit der Antriebseinrichtung (39) und der Auswerteeinrichtung (32) elektrisch verbindet, während sie die Software-Servoeinrichtung (38) von der Antriebseinrichtung (30) und der Auswerteeinrichtung (32) elektrisch trennt.

**4.** Apparat gemäß Anspruch 3, dadurch gekennzeichnet, daß die Betriebsarten-Bestimmungseinrichtung weiterhin umfaßt:

eine mit der Schalteinrichtung (34) gekoppelte Schaltsteuerungseinrichtung (44, 46, 48) zur Überwachung einer Änderung des dynamischen Modells des Manipulators, die die Schalteinrichtung (34) automatisch in den zweiten Schaltzustand umschaltet, wenn die Änderung des dynamischen Modelles ein vorgegebenes Ausmaß überschreitet.

**5.** Apparat gemäß Anspruch 4, dadurch gekennzeichnet, daß die Schaltsteuereinrichtung folgendes beinhaltet:

eine Differenzauswerteeinrichtung (44) zum Empfang eines vierten elektrischen Signals, das eine Drehbewegung der Glieder (12) des Manipulators (10) meldet, und der Sensorausgangssignale von den Sensoren (24a, 24b), zur Erkennung einer Differenz zwischen diesen Eingangssignalen und zur Generierung eines fünften elektrischen Signals, das die erkannte Differenz repräsentiert.

**6.** Apparat gemäß Anspruch 5, dadurch gekennzeichnet, daß die Schaltsteuerungseinrichtung außerdem folgendes umfaßt:

eine mit der Differenzauswerteeinrichtung (44) gekoppelte Komparatoreinrichtung (46) zum Empfang des fünften elektrischen Signals, zum Vergleich der erkannten Differenz mit einem vorgegebenen Referenzpegel zur Festlegung einer Abweichung und zur Erzeugung eines sechsten elektrischen Signals, das ein Umschalten der Betriebsart angibt, wenn die erkannte Differenz den Referenzpegel überschreitet, wonach das sechste elektrische Signal an die Schalteinrichtung (34) angelegt wird und die Schalteinrichtung als Reaktion auf das sechste elektrische Signal anspricht.

**7.** Apparat gemäß Anspruch 6, dadurch gekennzeichnet, daß die Schalteinrichtung einen elektrischen Schaltkreis (SW1, SW2) unfaßt.

**Revendications**

**1.** Appareil pour commander un manipulateur (10) comportant des membres intermédiaires couplés en rotation l'un à l'outre à des portions articulées de ces derniers pour constituer un bras de robot à articulations multiples, dans lequel ledit manipulateur comporte des dispositifs d'entraînement (22a, 22b) prévus auxdites portions articulées (20a, 20b), destinés à la rotation desdits membres intermédiaires, ainsi que des détecteurs (24a, 24b) prévus auxdites portions articulées, destinés à mesurer la rotation desdits membres intermédiaires pour générer des signaux de sortie de détecteurs, et dans lequel ledit appareil comprend :

un moyen d'identification (36) pour identifier un modèle dynamique dudit manipulateur et pour générer un premier signal électrique indicateur d'un résultat d'identification;

un moyen de calcul (40) relié audit moyen d'identification pour calculer des paramètres de commande dudit manipulateur conformément au résultat d'identification et pour générer un second signal électrique indicateur de nouveaux paramètres de commande de manipulateur calculés de façon à compenser une modification intervenant dans ledit modèle dynamique; et

un moyen de servomécanisme logiciel (38) relié audit moyen de calcul pour générer, en utilisant lesdits nouveaux paramètres de commande, un troisième signal électrique correspondant à un signal de commande séquentiel d'entraînement provenant desdits dispositifs d'entraînement, nécessaire pour commander le mouvement rotatif desdits membres intermédiaires, par lequel la commande d'entraînement des membres intermédiaires réalisée par ledit moyen de servomécanisme logiciel peut compenser la modification intervenant dans ledit modèle dynamique, caractérisé en ce que ledit appareil comprend, en outre :

un moyen de désignation de mode (34, 44, 46) relié auxdits détecteurs (24a, 24b) et audit moyen d'identification (36) pour surveiller une modification intervenant dans le modèle dynamique dudit manipulateur (10) en se basant sur lesdits signaux de sortie de détecteurs et pour faire en sorte que ledit moyen d'identification (36) soit opérationnel lorsqu'une modification intervenant dans le modèle dynamique dépasse un niveau prédéterminé;

un moyen d'entraînement (30) relié auxdits dispositifs d'entraînement (22a, 22b) pour entraîner électriquement lesdits dispositifs d'entraînement (22a, 22b) en réponse audit troisième signal électrique qu'il reçoit; et

un moyen de détection (32) relié auxdits détecteurs (24a, 24b) pour recevoir les signaux de sortie de détecteurs représentant des données réellement mesurées quant à la rotation desdits membres intermédiaires et pour détecter un angle de rotation et une vitesse angulaire d'un membre intermédiaire correspondant à chaque portion articulée, et

en ce que ledit moyen de désignation de mode relie électriquement ledit moyen de servomécanisme logiciel (38) audit moyen d'entraînement (30) et audit moyen de détection (32) dans un mode de commande normal, et met automatiquement ledit appareil (14) dans un mode d'identification de modèle dynamique lorsqu'un changement intervenant dans le modèle dynamique dudit manipulateur (10) dépasse un niveau prédéterminé, si bien que ledit moyen de servomécanisme logiciel (38) n'a plus de contact électrique avec ledit moyen d'entraînement (30) et ledit moyen de détection (32), tandis que ledit moyen d'identification (36) est électriquement relié audit moyen d'entraînement (30) et audit moyen de détection (32).

2. Appareil selon la revendication 1, caractérisé en ce que ledit moyen de servomécanisme logiciel (38) mémorise des paramètres de commande virtuels correspondant à un modèle dynamique standard dudit manipulateur, installés au préalable et lorsque lesdits nouveaux paramètres de commande parviennent audit moyen de servomécanisme logiciel (38) en provenance dudit moyen de calcul (40), ledit moyen de servomécanisme logiciel (38) remplaçant lesdits paramètres de commande standards par lesdits nouveaux paramètres de commande.

3. Appareil selon la revendication 2, caractérisé en ce que ledit moyen de désignation de mode comprend :

un moyen de commutation (34) relié audit moyen d'entraînement (30), audit moyen de détection (32), audit moyen d'identification (36) et audit moyen de servomécanisme logiciel (38) pour, dans un premier état de commutation, relier électriquement ledit moyen de servomécanisme logiciel (38) audit moyen d'entraînement (30) et audit moyen de détection (32), et supprimer le contact électrique dudit moyen d'identification (36) avec ledit moyen d'entraînement (30) et ledit moyen de détection (32), et pour, dans un second état de commutation, relier électriquement ledit moyen d'identification (36) audit moyen d'entraînement (30) et audit moyen de détection (32), et supprimer le contact électrique dudit moyen de servomécanisme logiciel (38) avec ledit moyen d'entraînement (30) et ledit moyen de détection (32).

4. Appareil selon la revendication 3, caractérisé en ce que ledit moyen de désignation de mode comprend, en outre :

un moyen de commande de commutation (44, 46, 48) relié audit moyen de commutation (34) pour surveiller un changement intervenant dans le modèle dynamique dudit manipulateur et, lorsqu'un changement intervenant dans le modèle dynamique dépasse un niveau prédéterminé, mettre, par commutation automatique, ledit moyen de commutation (34) dans le second état de commutation.

5. Appareil selon la revendication 4, caractérisé en ce que ledit moyen de commande de commutation englobe :

un moyen de détection de différence (44) pour recevoir un quatrième signal électrique qui désigne un mouvement de rotation desdits membres intermédiaires (12) dudit manipulateur (10), ainsi que les signaux de sortie de détecteurs provenant desdits détecteurs (24a, 24b), détecter une différence entre ces signaux d'entrée et produire un cinquième signal électrique qui représente la différence détectée.

6. Appareil selon la revendication 5, caractérisé en ce que ledit moyen de commande de commutation englobe, en outre:

un moyen de comparateur (46) relié audit moyen de détection de différence (44) pour recevoir ledit cinquième signal électrique, comparer la différence détectée et un niveau de référence prédéterminé pour définir une tolérance, et générer un sixième signal électrique qui désigne la commutation de mode lorsque la différence détectée dépasse le niveau de référence, ledit sixième signal électrique étant envoyé audit moyen de commutation (34) et ledit moyen de commutation étant mis en service en réponse audit sixième signal électrique.

7. Appareil selon la revendication 6, caractérisé en ce que ledit moyen de commutation englobe un circuit de commutation électrique (SW1, SW2).

# F I G. 1

# F I G. 2

```
( START )
```

SET SWITCH UNIT 34 IN FIRST SWITCHING
STATE, AND CONNECT SOFTWARE SERVO
UNIT 38 TO ACTUATOR DRIVER 30 AND
DETECTOR 32

NORMALLY CONTROL MANIPULATOR IO BASED
ON INITIALIZED CONTROL PARAMETERS

DETECT DIFFERENCE BETWEEN LINK ROTATION
MEASUREMENT DATA FROM MANIPULATOR
SENSORS 24 AND LINK ROTATION DESIGNATION
DATA FROM HOST CONTROLLER

DOES
DETECTED DIFFERENCE
FALL IN ALLOWANCE
?

YES

NO

SET SWITCH UNIT 34 IN SECOND SWITCHING
STATE, AND CONNECT PARAMETER IDENTIFIER
36 TO ACTUATOR DRIVER 30 AND DETECTOR 32

IDENTIFY CHANGED DYNAMICAL MODEL OF
MANIPULATOR

UPDATE CONTROL PARAMETERS OF SOFTWARE
SERVO UNIT 38 IN ACCORDANCE WITH
IDENTIFICATION RESULT AND CHANGE IN
DYNAMICAL MODEL